# EUROPEAN PATENT SPECIFICATION

(11) **EP 4 594 891 B1**
(45) Date of publication and mention of the grant of the patent: **02.12.2026**
(21) Application number: 22800399.2
(22) Date of filing: 29.09.2022
(51) Int. Cl.: G06F 13/42

(54) **BANDWIDTH MAXIMIZATION**
BANDBREITENMAXIMIERUNG
MAXIMISATION DE LARGEUR DE BANDE

(43) Date of publication of application: 06.08.2025
(73) Proprietor: Siemens Industry Software Inc., Plano, TX 75024 (US)
(72) Inventor: ROBERTSON, Iain, Cambridge CB1 2JH (GB)
(74) Representative: Siemens Patent Attorneys
(86) International application number: PCT/US2022/045190
(87) International publication number: WO 2024/072393

(56) References cited:
- US-B1- 10 505 837
- ALTERA.COM: "Avalon Interface Specifications - Version 1.3", 31 August 2010 (2010-08-31), San Jose, CA, USA, XP055670404, Retrieved from the Internet <URL:https://www.intel.com/content/dam/www/programmable/us/en/pdfs/literature/manual/mnl_avalon_spec_1_3.pdf> [retrieved on 20200220]

## Description

### TECHNICAL FIELD

The present disclosure relates to methods and systems for communicating data in an integrated circuit.

### BACKGROUND

In recent years electronic devices incorporating System-on-Chip (SoC) circuits have become ubiquitous. This trend has been driven by demand for small consumer electronics devices such as smart phones and tablets and the use of SoC in embedded systems such as Internet-of-Things (IoT) devices and Wi-Fi routers.

SoC devices are integrated circuits which combine computing components on a single substrate or microchip. These components may include one or more processor cores, memory, input/output interfaces, a graphics processing unit (GPU), and secondary storage interfaces. SoC architectures provide numerous benefits including power saving, space saving, lower latency, and cost reduction.

US10505837 B1 is disclosing a method of communicating data packet stream in which data is re-packed.

### SUMMARY

It is an object of the disclosure to provide a method for communicating data in an integrated cicruict.

The foregoing and other objects are achieved by the features of the independent claims. Further implementation forms are apparent from the dependent claims, the description and the figures.

According to the invention, a method communicating data in an integrated circuit including at least two interconnected sub-blocks in a System-on-Chip (SoC) arrangement is provided. The method includes transmitting, from a first sub-block to a second sub-block, a first signal asserting that the first sub-block is ready to transmit data to the second sub-block; receiving, from the second sub-block, at the first sub-block, a second signal, the second signal asserting that the second sub-block is ready to receive data from the first sub-block; and transmitting data via a third signal from the first sub-block to the second sub-block during one or more clock cycles of the integrated circuit, the data including one or more contiguous messages. The first signal includes, at the end of the transmission of the one or more contiguous messages, information that enables the second sub-block to determine a position of the end of the last message of the one or more contiguous messages, wherein, when the last message terminates without valid message data in the final position of the third signal, the first signal indicates that the position of the end of the last message is provided in data transmitted in the third signal.

The method according to the first aspect allows a sub-block to transmit messages to another sub-block contiguously. The method maximises the bandwidth of communication between sub-blocks without increasing the complexity of logic at the receiving sub-block.

According to the invention, an integrated circuit including at least two sub-blocks in a System-on-Chip (SoC) arrangement is provided. The first sub-block of the at least two sub-blocks is configured to: transmit a first signal asserting that the first sub-block is ready to transmit data to a second sub-block; receive, from the second sub-block, a second signal asserting that the second sub-block is ready to receive data from the first sub-block; and transmit data via a third signal during one or more clock cycles of the integrated circuit, the data including one or more contiguous messages. The first signal includes, at the end of the transmission of the one or more contiguous messages, information that enables the second sub-block to determine a position of the end of the last message of the one or more contiguous messages, wherein, when the last message terminates without valid message data in the final position of the third signal, the first signal indicates that the position of the end of the last message is provided in data transmitted in the third signal.

In a first implementation of the method according to the first aspect, the position of the end of the last message includes a byte position in the third signal during the clock cycle containing the end of the transmission.

In a second implementation, the end of the last message includes the last byte in the third signal during the clock cycle containing the end of the transmission.

In a third implementation, the information that enables the second sub-block to determine a position of the end of the last message includes information indicating that the end of the message is the last byte of the third signal.

The method according to the third implementation enables the receiving sub-block to determine that the byte position of the end of the message is the last byte of the third signal. This enables the receiving sub-block to determine that all received bytes in the clock cycle are valid data bytes of messages from the transmitting sub-block.

In a fourth implementation, the position is provided in the last byte in the third signal during the clock cycle containing the end of the transmission.

In a fifth implementation, the information that enables the second sub-block to determine a position of the end of the last message includes information indicating that the position of the end of the message is provided in the last byte of the third signal during the clock cycle containing the end of the transmission.

The method according to the fifth implementation enables the receiving sub-block to determine that the position of the end of the message is provided in the last byte of the third signal. This enables the receiving sub-block to determine the cycle containing the end of the transmission when messages are sent contiguously.

In a sixth implementation, the first signal includes information indicating transmission of an event message from the first sub-block.

These and other aspects of the disclosure are apparent from the embodiment(s) described below.

### BRIEF DESCRIPTION OF THE DRAWINGS

For a more complete understanding of the present disclosure, and the advantages thereof, reference is now made to the following descriptions taken in conjunction with the accompanying drawings, in which:
Figure 1 shows a schematic diagram of an integrated circuit, according to an example.
Figure 2 shows a flow diagram of a method for communicating data, according to an example.
Figure 3 shows a signal diagram, according to an example.

### DETAILED DESCRIPTION

Example embodiments are described below in sufficient detail to enable those of ordinary skill in the art to embody and implement the systems and processes herein described. It is important to understand that embodiments can be provided in many alternate forms and should not be construed as limited to the examples set forth herein.

Accordingly, while embodiments can be modified in various ways and take on various alternative forms, specific embodiments thereof are shown in the drawings and described in detail below as examples. There is no intent to limit to the particular forms disclosed. On the contrary, all modifications, equivalents, and alternatives falling within the scope of the appended claims should be included. Elements of the example embodiments are consistently denoted by the same reference numerals throughout the drawings and detailed description where appropriate.

The terminology used herein to describe embodiments is not intended to limit the scope. The articles "a," "an," and "the" are singular in that they have a single referent, however the use of the singular form in the present document should not preclude the presence of more than one referent. In other words, elements referred to in the singular can number one or more, unless the context clearly indicates otherwise. The terms "comprises," "comprising," "includes," and/or "including," when used herein, specify the presence of stated features, items, steps, operations, elements, and/or components, but do not preclude the presence or addition of one or more other features, items, steps, operations, elements, components, and/or groups thereof.

Unless otherwise defined, all terms including technical and scientific terms used herein are to be interpreted as is customary in the art. Terms in common usage should also be interpreted as is customary in the relevant art and not in an idealized or overly formal sense unless expressly so defined herein.

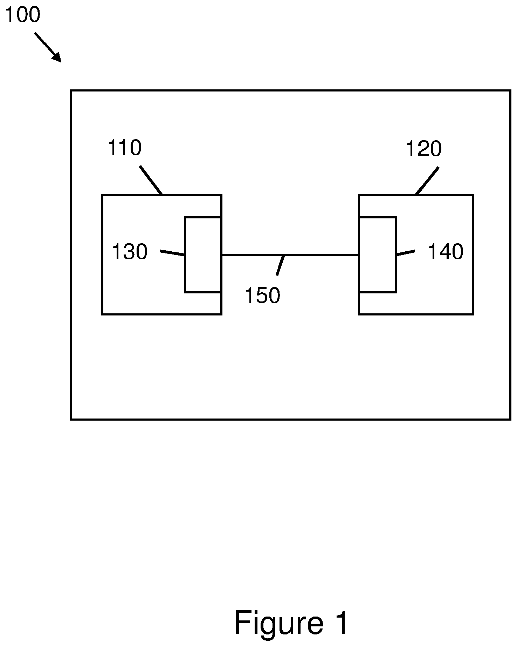

Figure 1 is a simplified schematic diagram showing an integrated circuit 100, according to an example. The integrated circuit 100 shown in Figure 1 may be used in conjunction with the other methods and systems described herein.

The integrated circuit 100 includes sub-blocks 110, 120 in a System on Chip (SoC) arrangement. The sub-blocks 110, 120 are fully integrated into the circuit 100 on a single substrate or microchip. Each of sub-blocks 110, 120 may be a central processing unit (CPU), a memory device, input/output device, secondary storage devices, graphical processing units (GPUs), custom logic, or any other type of component suitable for a SoC architecture. In the example shown in Figure 1, the integrated circuit 100 includes two sub-blocks 110, 120. In other examples, more than two sub-blocks may be provided on the integrated circuit 100.

According to examples, the sub-blocks 110, 120 include communication interfaces 130, 140. The interfaces 130, 140 are connected via interconnect circuitry 150. The sub-blocks 110, 120 may transmit data via interfaces 130, 140 and interconnect circuitry 150. Data may be transmitted as messages. A message includes a data payload and a message header. The message header may include addressing information which may be used to route the message to a destination address specified in the addressing information. The message may also include further metadata. For example, the message may include a time stamp which is generated at the same source as the message and identifying information.

According to examples, the interconnect circuity 150, which may include a data bus, is limited to communicate a maximum amount of data per clock cycle of the integrated circuit 100. In some cases, a message may span one or more cycles. If the transmitting sub-block is limited to sending a single message per clock cycle, then a valid/ready handshake protocol may be used to convey information enabling the receiver sub-block to determine whether a message continues to the subsequent cycle or whether the cycle contains the end of the message. In other examples a message may be shorter than the available data bus width. If a single message is transmitted per clock cycle using the valid/ready protocol, bits may go unused in the clock cycle and the effective bandwidth is lower as a result.

The methods described herein are used to transmit messages contiguously in a bit stream. The transmitting sub-block communicates information enabling the receiving sub-block to determine a position of the end of the last message in a transmission of messages from the transmitting sub-block. The information provided by the transmitting sub-block allows efficient use of processing power and available bandwidth throughout the integrated circuit. For example, the receiving sub-block may use the information to pack messages into a buffer efficiently for storage or communication on-chip or for communicating data off-chip, with fewer available bits being wasted.

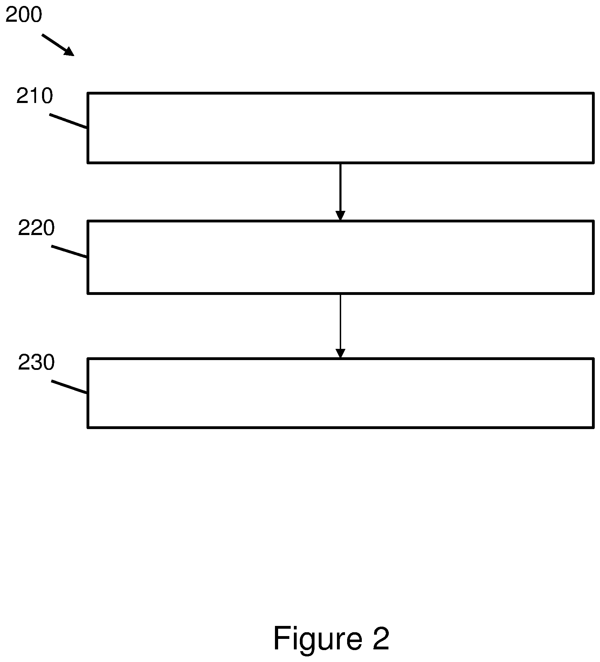

Figure 2 is a block diagram of a method 200 for communicating data in an integrated circuit including at last two interconnected sub-blocks in a SoC arrangement, according to an example. The method 200 may be used to communicate data in the form of one or more contiguous messages on the integrated circuit 100, between the sub-blocks 110, 120.

At block 210, the method 200 includes transmitting a first signal from a first sub-block to a second sub-block of the integrated circuit. The first signal asserts that the first sub-block is ready to transmit data to the second sub-block.

At block 220, the method 200 includes receiving a second signal from the second sub-block, at the first sub-block. The second signal asserts that the second sub-block is ready to receive data from the first sub-block.

At block 230, the method 200 includes transmitting data including one or more contiguous messages via a third signal from the first sub-block to the second sub-block during one or more clock cycles of the integrated circuit. At the end of the transmission of the one or more contiguous messages the first signal includes information that enables the second sub-block to determine a position of the end of the last message of the one or more contiguous messages.

According to examples of the method 200, the position of the end of the last message may include a byte position in the third signal during the clock cycle containing the end of the transmission. For example, in the case where all bytes in the clock cycle are 'valid' message data the byte position of the end of the last message includes the last byte in the third signal. **In** that case the first signal provides information indicating that the end of the message is the last byte of the third signal.

In the case where not all of the available bytes are used for message data, the last byte in the third signal during the clock cycle containing the end of the transmission may be used to indicate the position of the end of the message data in the clock cycle. In that case, the first signal includes information indicating that the position of the end of the message is provided in the last byte of the third signal. In some examples, the first signal may indicate that the position of the end of the last message is provided in the N most significant bits. For example, rather than the last byte, the first signal may include information indicating that the position of the end of the last message is indicated in the last four bits of the third signal.

Table 1 below shows an encoding scheme which may be used to convey information in the first signal in the method 200.

**Table 1**

| **Code** | **Meaning** |
|---|---|
| 000 | Idle |
| 001 | Event |
| 010 | - |
| 011 | - |
| 100 | Message, continues to next clock cycle |
| 101 | Message, clock cycle contains end of message, only one sent |
| 110 | Message, cycle contains end of message, position of last valid byte indicated in most significant byte |
| 111 | Message, cycle contains end of message, all bytes valid |

The information allows the transmission of one or more contiguous messages to a receiving sub-block while also signalling to the sub-block where the end of the one or more messages is relative to the clock cycle.

The encoding scheme in Table 1 is based on the use of a three-bit logical signal. The receiving sub-block may be configured to decode the received signal and interpret the signal accordingly. Such a three-bit signal may be provided by three physical wires conveying single bits of information to the receiving sub-block. Different encoding schemes to the scheme shown in Table 1 may be used to convey information. In some cases, additional bits may be used to encode additional information.

The first column in Table 1 shows different encodings, and the second column shows the meaning of the code transmitted by the first sub-block and interpreted by the second sub-block when the third signal is received. In Table 1, the code 000 is used to convey that no message data is being transmitted. The code 001 is reserved for an event message. Event messages may be cross-triggered messages which are communicated in response to events on the integrated circuit. If the code is 100, the receiving sub-block knows that the message or messages continue to the next clock cycle. If the code is 101, the receiving sub-block knows that the cycle contains the end of the message and only one message has been sent. If the code is 110, then the sub-block receiving the first signal knows that the position of the last valid byte of the message is provided in the most significant byte, *i.e.,* the last byte of the third signal in that clock cycle. If the code is 111, then this signals to the receiving sub-block that all bytes on the data bus are valid. The codes 010 and 011 are not used. In some examples, these codes may be used to specify different types of events, for example.

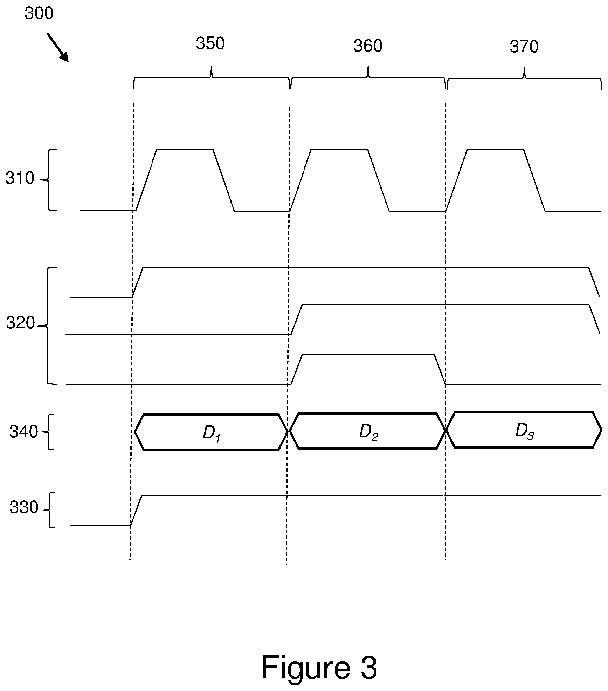

Figure 3 shows a signal diagram 300. The signal diagram 300 includes a clock signal 310 as well as signals 320, 330, 340. These signals correspond to the first, second, and third signals of the method 200. The clock signal 310 includes three clock cycles 350, 360, 370. This may correspond to the clock signal of the integrated circuit 100, for example. In Figure 3, the signal 320, which corresponds to the first signal in the method 200, is represented as three separate signals which each have 0/1 states representing the three bits of the logical signal of table 1. The signal 330 has 0/1 states, which corresponds to the signal sent from the second sub-block to the first sub-block in the method 200 indicating when the second sub-block is ready to receive data from the first sub-block. The signal 340 corresponds to the third signal which transmits data from the first sub-block to the second sub-block.

In Figure 3, initially all the signals are in the 0 state. In the first clock cycle 350, the signal 330 transmits a '1' meaning that the second sub-block is ready to receive data from the first sub-block. The signal 340 transmits data beats *D₁, D₂,* and *D₃*. In the first clock cycle 350, the signal 320 transmits the code 100 indicating that all the data transmitted in the first data beat *D₁* is part of the same message, and the message continues to the next clock cycle. In the second clock cycle 330 the signal 320 transmits the code 111 indicating that the data transmitted in the second data beat *D₂* contains the end of a message, and all data bytes are valid message bytes. In the third clock cycle 370, the signal transmits 110 indicating that the data transmitted in the third data beat *D₃* contains the end of a message and the byte position of the last valid byte of the last message is indicated in the most significant byte of the data beat *D₃.*

The present disclosure is described with reference to flow charts and/or block diagrams of the method, devices and systems according to examples of the present disclosure. Although the flow diagrams described above show a specific order of execution, the order of execution may differ from that which is depicted. Blocks described in relation to one flow chart may be combined with those of another flow chart. In some examples, some blocks of the flow diagrams may not be necessary and/or additional blocks may be added.

The present disclosure may be embodied in other specific apparatus and/or methods. The described embodiments are to be considered in all respects as illustrative and not restrictive. In particular, the scope of the disclosure is indicated by the appended claims rather than by the description and figures herein. All changes that come within the meaning and range of equivalency of the claims are to be embraced within their scope.

## Claims

1. A method for communicating data in an integrated circuit comprising at least two interconnected sub-blocks (110, 120) in a System-on-Chip, SoC arrangement, the method comprising:
transmitting, from a first sub-block to a second sub-block, a first signal (320) asserting that the first sub-block is ready to transmit data to the second sub-block (210);
receiving, from the second sub-block, at the first sub-block, a second signal (330), the second signal asserting that the second sub-block is ready to receive data from the first sub-block (220); and
transmitting data via a third signal (340) from the first sub-block to the second sub-block during one or more clock cycles of the integrated circuit, the data comprising one or more contiguous messages (230),
wherein the first signal (320) comprises, at the end of the transmission of the one or more contiguous messages, information that enables the second sub-block to determine a position of the end of the last message of the one or more contiguous messages; and
**characterized in that**
when the last message terminates without valid message data in the final position of the third signal, the first signal indicates that the position of the end of the last message is provided in data transmitted in the third signal.

2. The method of claim I, wherein the position of the end of the last message comprises a byte position in the third signal during the clock cycle containing the end of the transmission.

3. The method of claim 2, wherein the end of the last message comprises the last byte in the third signal during the clock cycle containing the end of the transmission.

4. The method of claim 3, wherein the information that enables the second sub-block to determine a position of the end of the last message comprises information indicating that the end of the message is the last byte of the third signal.

5. The method of claim I, wherein the position is provided in the last byte in the third signal during the clock cycle containing the end of the transmission.

6. The method of claim 5, wherein the information that enables the second sub-block to determine a position of the end of the last message comprises information indicating that the position of the end of the message is provided in the last byte of the third signal during the clock cycle containing the end of the transmission.

7. The method of claim I, wherein the first signal comprises information indicating transmission of an event message from the first sub-block.

8. An integrated circuit comprising at least two sub-blocks (110, 120) in a System-on-Chip, SoC arrangement , wherein a first sub-block (110) of the at least two sub-blocks is configured to:
transmit a first signal (320) asserting that the first sub-block is ready to transmit data to a second sub_block (210);
receive, from the second sub-block, a second signal (330) asserting that the second sub-block is ready to receive data from the first sub_block (220); and
transmit data via a third signal (340) during one or more clock cycles of the integrated circuit, the data comprising one or more contiguous messages (230);
wherein the first signal (320) comprises, at the end of the transmission of the one or more contiguous messages, information that enables the second sub-block to determine a position of the end of the last message of the one or more contiguous messages; and
**characterized in that**,
when the last message terminates without valid message data in the final position of the third signal, the first signal indicates that the position of the end of the last message is provided in data transmitted in the third signal.

9. The integrated circuit of claim 8, wherein the position of the end of the last message comprises a byte position in the third signal during the clock cycle containing the end of the transmission.

10. The integrated circuit of claim 9, wherein the end of the last message comprises the last byte in the third signal during the clock cycle containing the end of the transmission.

11. The integrated circuit of claim 10, wherein the information that enables the second sub-block to determine a position of the end of the last message comprises information indicating that the end of the message is the last byte of the third signal.

12. The integrated circuit of claim 8, wherein the position is provided in the last byte in the third signal during the clock cycle containing the end of the transmission.

13. The integrated circuit of claim 12, wherein the information that enables the second sub-block to determine a position of the end of the last message comprises information indicating that the position of the end of the message is provided in the last byte of the third signal during the clock cycle containing the end of the transmission

14. The integrated circuit of claim 8, wherein the first signal comprises information indicating transmission of an event message from the first sub-block.

## Patentansprüche

1. Verfahren zur Übermittlung von Daten in einer integrierten Schaltung, die mindestens zwei miteinander verbundene Unterblöcke (110, 120) in einer System-on-Chip(SoC)-Anordnung umfasst, wobei das Verfahren Folgendes umfasst:
Übertragen eines ersten Signals (320) von einem ersten Unterblock zu einem zweiten Unterblock, das angibt, dass der erste Unterblock bereit ist, Daten an den zweiten Unterblock (210) zu übertragen;
Empfangen eines zweiten Signals (330) von dem zweiten Unterblock an dem ersten Unterblock, wobei das zweite Signal angibt, dass der zweite Unterblock bereit ist, Daten von dem ersten Unterblock (220) zu empfangen; und
Übertragen von Daten über ein drittes Signal (340) von dem ersten Unterblock zu dem zweiten Unterblock während eines oder mehrerer Taktzyklen der integrierten Schaltung, wobei die Daten eine oder mehrere zusammenhängende Nachrichten (230) umfassen,
wobei das erste Signal (320) an dem Ende der Übertragung der einen oder mehreren zusammenhängenden Nachrichten Informationen umfasst, die den zweiten Unterblock in die Lage versetzen, eine Position des Endes der letzten Nachricht der einen oder mehreren zusammenhängenden Nachrichten zu bestimmen; und
**dadurch gekennzeichnet, dass**
das erste Signal anzeigt, dass die Position des Endes der letzten Nachricht in den in dem dritten Signal übertragenen Daten bereitgestellt ist, wenn die letzte Nachricht ohne gültige Nachrichtendaten an der Endposition des dritten Signals endet.

2. Verfahren nach Anspruch 1, wobei die Position des Endes der letzten Nachricht eine Byteposition in dem dritten Signal während des Taktzyklus, der das Ende der Übertragung enthält, umfasst.

3. Verfahren nach Anspruch 2, wobei das Ende der letzten Nachricht das letzte Byte in dem dritten Signal während des Taktzyklus, der das Ende der Übertragung enthält, umfasst.

4. Verfahren nach Anspruch 3, wobei die Informationen, die den zweiten Unterblock in die Lage versetzen, eine Position des Endes der letzten Nachricht zu bestimmen, Informationen umfassen, die anzeigen, dass das Ende der Nachricht das letzte Byte des dritten Signals ist.

5. Verfahren nach Anspruch 1, wobei die Position in dem letzten Byte des dritten Signals während des Taktzyklus, der das Ende der Übertragung enthält, bereitgestellt ist.

6. Verfahren nach Anspruch 5, wobei die Informationen, die den zweiten Unterblock in die Lage versetzen, eine Position des Endes der letzten Nachricht zu bestimmen, Informationen umfassen, die anzeigen, dass die Position des Endes der Nachricht in dem letzten Byte des dritten Signals während des Taktzyklus, der das Ende der Übertragung enthält, bereitgestellt ist.

7. Verfahren nach Anspruch 1, wobei das erste Signal Informationen umfasst, die die Übertragung einer Ereignisnachricht von dem ersten Unterblock anzeigen.

8. Integrierte Schaltung, umfassend mindestens zwei Unterblöcke (110, 120) in einer System-on-Chip(SoC)-Anordnung, wobei ein erster Unterblock (110) der mindestens zwei Unterblöcke zu Folgendem konfiguriert ist:
Übertragen eines ersten Signals (320), das angibt, dass der erste Unterblock bereit ist, Daten an einen zweiten Unterblock (210) zu übertragen;
Empfangen eines zweiten Signals (330) von dem zweiten Unterblock, das angibt, dass der zweite Unterblock bereit ist, Daten von dem ersten Unterblock (220) zu empfangen; und
Übertragen von Daten über ein drittes Signal (340) während eines oder mehrerer Taktzyklen der integrierten Schaltung,
wobei die Daten eine oder mehrere zusammenhängende Nachrichten (230) umfassen;
wobei das erste Signal (320) an dem Ende der Übertragung der einen oder mehreren zusammenhängenden Nachrichten Informationen umfasst, die den zweiten Unterblock in die Lage versetzen, eine Position des Endes der letzten Nachricht der einen oder mehreren zusammenhängenden Nachrichten zu bestimmen; und
**dadurch gekennzeichnet, dass**
das erste Signal anzeigt, dass die Position des Endes der letzten Nachricht in den in dem dritten Signal übertragenen Daten bereitgestellt ist, wenn die letzte Nachricht ohne gültige Nachrichtendaten an der Endposition des dritten Signals endet.

9. Integrierte Schaltung nach Anspruch 8, wobei die Position des Endes der letzten Nachricht eine Byteposition in dem dritten Signal während des Taktzyklus, der das Ende der Übertragung enthält, umfasst.

10. Integrierte Schaltung nach Anspruch 9, wobei das Ende der letzten Nachricht das letzte Byte in dem dritten Signal während des Taktzyklus, der das Ende der Übertragung enthält, umfasst.

11. Integrierte Schaltung nach Anspruch 10, wobei die Informationen, die den zweiten Unterblock in die Lage versetzen, eine Position des Endes der letzten Nachricht zu bestimmen, Informationen umfassen, die anzeigen, dass das Ende der Nachricht das letzte Byte des dritten Signals ist.

12. Integrierte Schaltung nach Anspruch 8, wobei die Position in dem letzten Byte in dem dritten Signal während des Taktzyklus, der das Ende der Übertragung enthält, bereitgestellt ist.

13. Integrierte Schaltung nach Anspruch 12, wobei die Informationen, die den zweiten Unterblock in die Lage versetzen, eine Position des Endes der letzten Nachricht zu bestimmen, Informationen umfassen, die anzeigen, dass die Position des Endes der Nachricht in dem letzten Byte des dritten Signals während des Taktzyklus, der das Ende der Übertragung enthält, bereitgestellt ist.

14. Integrierte Schaltung nach Anspruch 8, wobei das erste Signal Informationen umfasst, die die Übertragung einer Ereignisnachricht von dem ersten Unterblock anzeigen.

## Revendications

1. Procédé de communication de données dans un circuit intégré comprenant au moins deux sous-blocs interconnectés (110, 120) dans une configuration de système sur puce, SoC, le procédé comprenant :
la transmission, d'un premier sous-bloc à un second sous-bloc, d'un premier signal (320) affirmant que le premier sous-bloc est prêt à transmettre des données au second sous-bloc (210) ;
la réception, du second sous-bloc, au niveau du premier sous-bloc, d'un deuxième signal (330), le deuxième signal affirmant que le second sous-bloc est prêt à recevoir des données du premier sous-bloc (220) ; et
la transmission de données via un troisième signal (340) du premier sous-bloc au second sous-bloc pendant un ou plusieurs cycles d'horloge du circuit intégré, les données comprenant un ou plusieurs messages contigus (230),
dans lequel le premier signal (320) comprend, à la fin de la transmission des un ou plusieurs messages contigus, des informations permettant au second sous-bloc de déterminer une position de la fin du dernier message des un ou plusieurs messages contigus ; et
**caractérisé en ce que**
lorsque le dernier message se termine sans données de message valides dans la position finale du troisième signal, le premier signal indique que la position de la fin du dernier message est fournie dans les données transmises dans le troisième signal.

2. Procédé selon la revendication 1, dans lequel la position de la fin du dernier message comprend une position d'octet dans le troisième signal pendant le cycle d'horloge contenant la fin de la transmission.

3. Procédé selon la revendication 2, dans lequel la fin du dernier message comprend un dernier octet dans le troisième signal pendant le cycle d'horloge contenant la fin de la transmission.

4. Procédé selon la revendication 3, dans lequel les informations permettant au second sous-bloc de déterminer une position de la fin du dernier message comprennent des informations indiquant que la fin du message est le dernier octet du troisième signal.

5. Procédé selon la revendication 1, dans lequel la position est fournie dans le dernier octet dans le troisième signal pendant le cycle d'horloge contenant la fin de la transmission.

6. Procédé selon la revendication 5, dans lequel les informations permettant au second sous-bloc de déterminer la position de la fin du dernier message comprennent des informations indiquant que la position de la fin du message est fournie dans le dernier octet du troisième signal pendant le cycle d'horloge contenant la fin de la transmission.

7. Procédé selon la revendication 1, dans lequel le premier signal comprend des informations indiquant la transmission d'un message d'événement du premier sous-bloc.

8. Circuit intégré comprenant au moins deux sous-blocs (110, 120) dans une configuration de système sur puce, SoC, dans lequel un premier sous-bloc (110) des au moins deux sous-blocs est configuré pour :
transmettre un premier signal (320) affirmant que le premier sous-bloc est prêt à transmettre des données à un second sous-bloc (210) ;
recevoir, du second sous-bloc, un deuxième signal (330) affirmant que le second sous-bloc est prêt à recevoir des données du premier sous-bloc (220) ; et
transmettre des données via un troisième signal (340) pendant un ou plusieurs cycles d'horloge du circuit intégré,
les données comprenant un ou plusieurs messages contigus (230) ;
dans lequel le premier signal (320) comprend, à la fin de la transmission des un ou plusieurs messages contigus, des informations permettant au second sous-bloc de déterminer une position de la fin du dernier message des un ou plusieurs messages contigus ; et
**caractérisé en ce que**,
lorsque le dernier message se termine sans données de message valides dans la position finale du troisième signal, le premier signal indique que la position de la fin du dernier message est fournie dans les données transmises dans le troisième signal.

9. Circuit intégré selon la revendication 8, dans lequel la position de la fin du dernier message comprend une position d'octet dans le troisième signal pendant le cycle d'horloge contenant la fin de la transmission.

10. Circuit intégré selon la revendication 9, dans lequel la fin du dernier message comprend le dernier octet dans le troisième signal pendant le cycle d'horloge contenant la fin de la transmission.

11. Circuit intégré selon la revendication 10, dans lequel les informations permettant au second sous-bloc de déterminer la position de la fin du dernier message comprennent des informations indiquant que la fin du message est le dernier octet du troisième signal.

12. Circuit intégré selon la revendication 8, dans lequel la position est fournie dans le dernier octet dans le troisième signal pendant le cycle d'horloge contenant la fin de la transmission.

13. Circuit intégré selon la revendication 12, dans lequel les informations permettant au second sous-bloc de déterminer la position de la fin du dernier message comprennent des informations indiquant que la position de la fin du message est fournie dans le dernier octet du troisième signal pendant le cycle d'horloge contenant la fin de la transmission

14. Circuit intégré selon la revendication 8, dans lequel le premier signal comprend des informations indiquant la transmission d'un message d'évènement du premier sous-bloc.
